# EUROPEAN PATENT APPLICATION

(11) **EP 4 845 259 A1**
(43) Date of publication of application: **25.11.2026**
(21) Application number: 24921684.7
(22) Date of filing: 02.12.2024
(51) Int. Cl.: H04W 72/044

(54) **COMMUNICATION METHOD AND APPARATUS**

(30) Priority: 31.01.2024 CN 202410146539
(71) Applicant: Huawei Technologies Co., Ltd., Shenzhen, Guangdong 518129 (CN)
(72) Inventor: ZHANG, Zhiqin, Shenzhen, Guangdong 518129 (CN); FU, Zhang, Shenzhen, Guangdong 518129 (CN); LI, Meng, Shenzhen, Guangdong 518129 (CN); FENG, Zhao, Shenzhen, Guangdong 518129 (CN); WANG, Yuan, Shenzhen, Guangdong 518129 (CN)
(74) Representative: Huawei European IPR
(86) International application number: PCT/CN2024/136185
(87) International publication number: WO 2025/161662

(57) **Abstract**

This application relates to the communication field, and discloses a communication method and apparatus, to reduce network energy consumption during background data transfer. The communication method includes: A first network element receives, from an application function network element, a first request used for requesting a policy for transferring background data between the application function network element and a terminal device, and sends, to the application function network element, a first response used for responding to the first request, where the first response includes at least one first policy and an energy consumption parameter corresponding to each of the at least one first policy. The application function network element determines a second policy from the first policy based on the energy consumption parameter corresponding to the first policy, and transfers the background data according to the second policy.

## Description

This application claims priority to Chinese Patent Application No. 202410146539.1, filed with the China National Intellectual Property Administration on January 31, 2024 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

After a user equipment (user equipment, UE) accesses a mobile communication network, data may be transferred between the UE and an application function (application function, AF) network element via the network, so that a service provided by the AF network element is used. In the data transferred between the AF network element and the UE, a type of data has no strict requirement for real-time transfer and is referred to as background data. For example, the UE may send collected map data to the AF network element, so that the AF network element formulates a high-definition map based on the map data. The AF network element needs map data provided by a specific number of UEs in a specific period, to ensure accuracy of the high-definition map. In other words, the UE only needs to send the map data to the AF network element periodically, and does not need to send the map data to the AF network element immediately when collecting the map data. For another example, the AF network element may send application data to the UE, for the UE to update an application. Because the application does not need to be updated in real time, the AF network element does not need to send the application data to the UE immediately after generating the application data. Transferring the background data between the AF network element and the UE via the network may result in high network energy consumption.

### SUMMARY

This application provides a communication method and apparatus, to reduce network energy consumption during background data transfer.

To achieve the foregoing objective, the following technical solutions are used in this application.

According to a first aspect, a communication method is provided. The method may be performed by a first network element, may be a component or an apparatus (for example, a processor, a chip, or a chip system) used in the first network element, or may be a logical module or software that can implement all or some functions of the first network element. The communication method includes: First, the first network element receives, from an application function network element, a first request used for requesting a policy for transferring background data between the application function network element and a terminal device. The policy may be further explained as being used for transferring the background data between the application function network element and the terminal device via a network to which the first network element belongs. The network to which the first network element belongs is configured to transfer or forward the background data between the application function network element and the terminal device. Then, the first network element sends, to the application function network element, a first response used for responding to the first request, where the first response includes at least one first policy and an energy consumption parameter corresponding to each of the at least one first policy, and the energy consumption parameter may be included in the first policy. The energy consumption parameter corresponding to the first policy includes at least one of the following: consumed energy or energy efficiency. The consumed energy may have the following possible definitions: energy consumed for transferring the background data via the network when the background data is transferred between the application function network element and the terminal device according to the first policy, energy estimated to be consumed for transferring a specified data volume of the background data via the network when the background data is transferred between the application function network element and the terminal device according to the first policy, or energy consumed by the network when the background data is transferred between the application function network element and the terminal device via the network according to the first policy. The energy efficiency may be defined as energy efficiency of transferring the background data via the network when the background data is transferred between the application function network element and the terminal device according to the first policy.

It should be understood that the foregoing consumed energy and energy efficiency are estimated, not actually consumed. In the first aspect, after the first network element receives, from the application function network element, the first request used for requesting the policy for transferring the background data, the first network element sends, to the application function network element, the first response used for responding to the first request, where the first response includes the at least one first policy and the energy consumption parameter corresponding to each first policy, so that the application function network element selects, based on the energy consumption parameter, a policy for transferring the background data, thereby helping reduce energy consumption for transferring the background data via the network.

With reference to the first aspect, in a possible implementation, the first request may include first indication information, and the first indication information indicates that the network is to use renewable energy to transfer the background data, or the first indication information may further indicate that the background data needs to be transferred by using renewable energy. The first policy may include a first time window. In other words, the first policy indicates the application function network element to transfer the background data in the first time window, and the renewable energy is available to the network in the first time window.

In this implementation, the first network element provides, in response to the first indication information, the first policy including the first time window for the application function network element, so that the network can be configured to use the renewable energy to transfer the background data in the first time window, thereby helping achieve environmental protection and energy savings.

With reference to the first aspect, in a possible implementation, the first response may further include a ratio of the renewable energy to the energy used for transferring the background data via the network when the background data is transferred between the application function network element and the terminal device according to the first policy, where the renewable energy ratio may be included in the energy consumption parameter; and/or the first response may further include second information, where the second information indicates that the energy used for transferring the background data via the network includes the renewable energy when the background data is transferred between the application function network element and the terminal device according to the first policy. The first network element provides, for the application function network element, the renewable energy ratio and/or the second information corresponding to the first policy, as a reference for the application function network element to select a background data transfer policy, thereby helping achieve environmental protection and energy savings.

With reference to the first aspect, in a possible implementation, the method may further include: The first network element obtains the at least one first policy and the energy consumption parameter corresponding to the first policy.

For example, that the first network element obtains the at least one first policy and the energy consumption parameter corresponding to the first policy may include: The first network element determines, based on first information, the at least one first policy and the energy consumption parameter corresponding to the first policy, where the first information indicates energy efficiency of transferring the data via the network in each time period. Based on the first information, the first network element may estimate energy consumption parameters corresponding to transferring the background data via the network in different time periods, to determine a first policy with lower energy consumption.

Optionally, the method may further include: sending a third request to a second network element, where the third request is used for requesting the energy efficiency of transferring the data via the network in each time period; and receiving the first information from the second network element.

Optionally, the third request is determined based on the first request, and the first network element specifically designs the third request based on the first request. This helps improve a matching degree between the first information and the first request, so that the first policy determined based on the first information better meets a requirement of transferring the background data by the application function network element.

For another example, that the first network element obtains the at least one first policy and the energy consumption parameter corresponding to the first policy may include: The first network element sends a fourth request to the second network element, where the fourth request is used for requesting the policy, and the policy is used for transferring the background data between the application function network element and the terminal device; and receives, from the second network element, the at least one first policy and the energy consumption parameter corresponding to the first policy.

In this implementation, the first network element obtains the first policy and the energy consumption parameter corresponding to the first policy from the second network element based on a request. This can reduce processing complexity of the first network element.

With reference to the first aspect, in a possible implementation, the energy efficiency of transferring the background data via the network when the background data is transferred between the application function network element and the terminal device according to the first policy may include at least one of the following: an energy efficiency level, or a data volume of the background data transferred via the network per unit of energy when the background data is transferred between the application function network element and the terminal device according to the first policy.

According to a second aspect, a communication method is provided. The method may be performed by an application function network element, may be a component or an apparatus (for example, a processor, a chip, or a chip system) used in the application function network element, or may be a logical module or software that can implement all or some functions of the application function network element. The communication method includes: First, the application function network element receives a first response from a first network element, where the first response includes at least one first policy and an energy consumption parameter corresponding to each first policy, and the first policy is used for transferring background data between the application function network element and a terminal device, or the first policy may be further explained as being used for transferring the background data between the application function network element and the terminal device via a network to which the first network element belongs. The network to which the first network element belongs is configured to transfer or forward the background data between the application function network element and the terminal device, and the energy consumption parameter corresponding to the first policy includes at least one of the following: energy consumed for transferring the background data via the network when the background data is transferred between the application function network element and the terminal device according to the first policy, energy estimated to be consumed for transferring a specified data volume of the background data via the network when the background data is transferred between the application function network element and the terminal device according to the first policy, energy consumed by the network when the background data is transferred between the application function network element and the terminal device via the network according to the first policy, or energy efficiency used for transferring the background data via the network when the background data is transferred between the application function network element and the terminal device according to the first policy. Then, the application function network element determines a second policy from the first policy based on the energy consumption parameter corresponding to the first policy. Finally, the application function network element transfers the background data according to the second policy. The second policy is selected from the first policy based on the energy consumption parameter of each first policy, and using the second policy to transfer the background data helps reduce network energy consumption.

With reference to the second aspect, in a possible implementation, the method may further include: The application function network element sends, to the first network element, a first request used for requesting the first policy. In this way, the application function network element may request, as required, a policy used for transferring the background data.

With reference to the second aspect, in a possible implementation, the first request may include first indication information, and the first indication information indicates that the network is to use renewable energy to transfer the background data, or the first indication information may further indicate that the background data needs to be transferred by using renewable energy. The first policy may include a first time window. In other words, the first policy indicates the application function network element to transfer the background data in the first time window, and the renewable energy is available to the network in the first time window. Based on the first indication information, the application function network element can obtain the first policy including the first time window, so that the application function network element can transfer the background data in the time window in which the renewable energy is available to the network, thereby helping achieve environmental protection and energy savings.

With reference to the second aspect, in a possible implementation, the energy efficiency of transferring the background data via the network when the background data is transferred between the application function network element and the terminal device according to the first policy may include at least one of the following: an energy efficiency level, or a data volume of the background data transferred via the network per unit of energy when the background data is transferred between the application function network element and the terminal device according to the first policy.

According to a third aspect, this application provides a communication apparatus. The communication apparatus may be a first network element, or a chip or a system-on-a-chip in the first network element. The communication apparatus may implement functions performed by the first network element in the first aspect or the possible designs of the first aspect, and the functions may be implemented by hardware, or may be implemented by hardware by executing corresponding software. The hardware or the software includes one or more modules corresponding to the functions. For example, the communication apparatus includes a transceiver module, configured to: receive, from an application function network element, a first request used for requesting a policy for transferring background data between the application function network element and a terminal device, where a network to which the first network element belongs is configured to transfer the background data between the application function network element and the terminal device; and send, to the application function network element, a first response used for responding to the first request, where the first response includes at least one first policy and an energy consumption parameter corresponding to each of the at least one first policy. The energy consumption parameter corresponding to the first policy includes at least one of the following: energy consumed for transferring the background data via the network when the background data is transferred between the application function network element and the terminal device according to the first policy, energy estimated to be consumed for transferring a specified data volume of the background data via the network when the background data is transferred between the application function network element and the terminal device according to the first policy, or energy efficiency of transferring the background data via the network when the background data is transferred between the application function network element and the terminal device according to the first policy.

With reference to the third aspect, in a possible implementation, the first request may include first indication information, where the first indication information indicates that the network is to use renewable energy to transfer the background data, the first policy may include a first time window, and the renewable energy is available to the network in the first time window.

With reference to the third aspect, in a possible implementation, the first response may further include: a ratio of the renewable energy to the energy used for transferring the background data via the network when the background data is transferred between the application function network element and the terminal device according to the first policy; and/or the first response may further include: the energy used for transferring the background data via the network includes the renewable energy when the background data is transferred between the application function network element and the terminal device according to the first policy.

With reference to the third aspect, in a possible implementation, the apparatus may further include a processing module, configured to obtain the at least one first policy and the energy consumption parameter corresponding to the first policy.

With reference to the third aspect, in a possible implementation, the processing module may be specifically configured to determine, based on first information, the at least one first policy and the energy consumption parameter corresponding to the first policy, where the first information indicates energy efficiency of transferring the data via the network in each time period.

With reference to the third aspect, in a possible implementation, the transceiver module may be further configured to: send a third request to the second network element, where the third request is used for requesting the energy efficiency of transferring the data via the network in each time period; and receive the first information from the second network element.

With reference to the third aspect, in a possible implementation, the processing module may be specifically configured to invoke the transceiver module to send a fourth request to the second network element, where the fourth request is used for requesting the policy; and the transceiver module is further configured to receive, from the second network element, the at least one first policy and the energy consumption parameter corresponding to the first policy.

With reference to the third aspect, in a possible implementation, the energy efficiency of transferring the background data via the network when the background data is transferred between the application function network element and the terminal device according to the first policy may include at least one of the following: an energy efficiency level, or a data volume of the background data transferred via the network per unit of energy when the background data is transferred between the application function network element and the terminal device according to the first policy.

According to a fourth aspect, this application provides a communication apparatus. The communication apparatus may be an application function network element, or a chip or a system-on-a-chip in the application function network element. The communication apparatus may implement functions performed by the application function network element in the first aspect or the possible designs of the first aspect, and the functions may be implemented by hardware, or may be implemented by hardware executing corresponding software. The hardware or the software includes one or more modules corresponding to the functions. For example, the communication apparatus includes: a transceiver module, configured to receive a first response from a first network element, where the first response includes at least one first policy and an energy consumption parameter corresponding to each first policy, the first policy is used for transferring background data between the application function network element and a terminal device, a network to which the first network element belongs is configured to transfer the background data between the application function network element and the terminal device, and the energy consumption parameter corresponding to the first policy includes at least one of the following: energy consumed for transferring the background data via the network when the background data is transferred between the application function network element and the terminal device according to the first policy, energy estimated to be consumed for transferring a specified data volume of the background data via the network when the background data is transferred between the application function network element and the terminal device according to the first policy, or energy efficiency of transferring the background data via the network when the background data is transferred between the application function network element and the terminal device according to the first policy; and a processing module, configured to determine a second policy from the first policy based on the energy consumption parameter corresponding to the first policy, where the transceiver module is configured to transfer the background data according to the second policy.

With reference to the fourth aspect, in a possible implementation, the transceiver module may be further configured to send, to the first network element, a first request used for requesting the first policy.

With reference to the fourth aspect, in a possible implementation, the first request may include first indication information, where the first indication information indicates that the network is to use renewable energy to transfer the background data, the first policy may include a first time window, and the renewable energy is available to the network in the first time window.

With reference to the fourth aspect, in a possible implementation, the energy efficiency of transferring the background data via the network when the background data is transferred between the application function network element and the terminal device according to the first policy may include at least one of the following: an energy efficiency level, or a data volume of the background data transferred via the network per unit of energy when the background data is transferred between the application function network element and the terminal device according to the first policy.

According to a fifth aspect, this application provides a communication apparatus. The communication apparatus includes a processor and a memory. The memory stores computer instructions, and the processor may run the computer instructions to implement the method according to the first aspect or the second aspect. Further, the communication apparatus may further include a transceiver. The transceiver supports the communication apparatus in performing a sending and receiving function, for example, supporting the communication apparatus in sending a first request.

According to a sixth aspect, this application provides a computer-readable storage medium. The computer-readable storage medium stores computer instructions. When the computer instructions are run, the method according to the first aspect or the second aspect is performed.

According to a seventh aspect, this application provides a computer program product including instructions. When the computer program product is run on a computer, the computer is caused to perform the method according to the first aspect or the second aspect.

According to an eighth aspect, this application provides a chip. The chip includes a controller and an interface circuit. The controller is configured to interact with another apparatus through the interface circuit, to perform the method according to the first aspect or the second aspect.

According to a ninth aspect, this application provides a communication system. The communication system includes a first network element and an application function network element. The first network element is configured to perform the method according to the first aspect, and the application function network element is configured to perform the method according to the second aspect.

According to a tenth aspect, this application provides a communication method. The method includes: A first network element receives, from an application function network element, a first request used for requesting a policy used for transferring background data between the application function network element and a terminal device; and the first network element sends, to the application function network element, a first response used for responding to the first request, where the first response includes at least one first policy and an energy consumption parameter corresponding to each of the at least one first policy, and the energy consumption parameter may be included in the first policy. The application function network element receives the first response from the first network element, determines a second policy from the first policy based on the energy consumption parameter corresponding to the first policy, and then transfers the background data according to the second policy.

For beneficial effects described in the third aspect to the tenth aspect of this application, refer to analysis of beneficial effects of the first aspect or the second aspect. Details are not described herein again.

### BRIEF DESCRIPTION OF DRAWINGS

FIG. 1 is a diagram of an architecture of a communication system according to an embodiment of this application;
FIG. 2 is a diagram of a structure of another communication system according to an embodiment of this application;
FIG. 3 is a schematic flowchart of a communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a diagram of a structure of a communication apparatus according to an embodiment of this application;
FIG. 11 is a diagram of a structure of another communication apparatus according to an embodiment of this application; and
FIG. 12 is a diagram of a structure of another communication apparatus according to an embodiment of this application.

### DESCRIPTION OF EMBODIMENTS

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

A communication method provided in embodiments of this application may be applied to various communication systems, for example, a 6th generation (6th generation, 6G) mobile communication system, a long term evolution (long term evolution, LTE) system, a 5th generation (5th generation, 5G) mobile communication system, a wireless fidelity (wireless fidelity, Wi-Fi) system, a future communication system, or a system integrating a plurality of communication systems. This is not limited in embodiments of this application. 5G may also be referred to as new radio (new radio, NR).

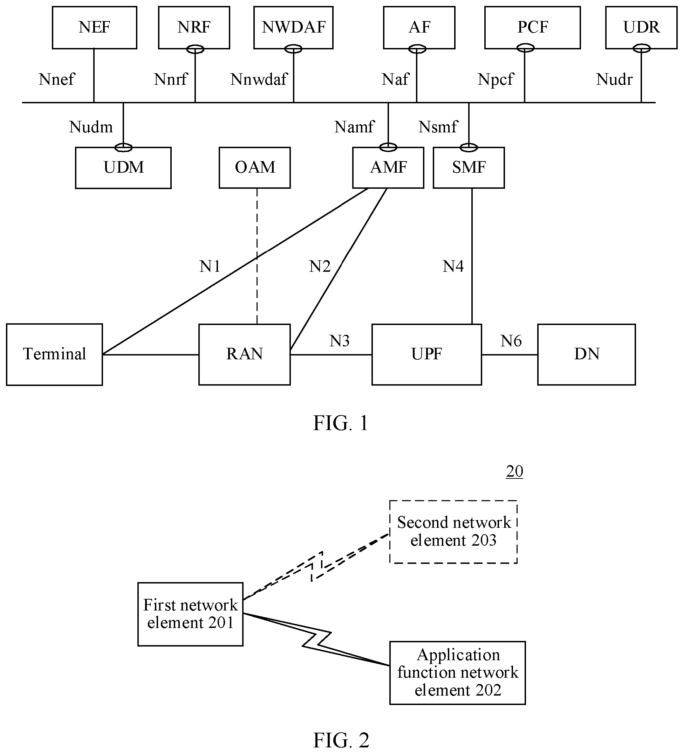

The following describes the communication method provided in embodiments of this application by using the communication systems shown in FIG. 1 and FIG. 2 as an example.

FIG. 1 is a diagram of an architecture of a communication system according to this application. The communication system shown in FIG. 1 may be a communication system in a 5G network. In FIG. 1, the 5G network includes a network exposure function (network exposure function, NEF) network element, a network repository function (NF repository function, NRF) network element, a network data analytics function (network data analytics function, NWDAF) network element, an application function (application function, AF) network element, a policy control function (policy control function, PCF) network element, a unified data repository (unified data repository, UDR) network element, a unified data management (unified data management, UDM) network element, an access and mobility management function (access and mobility management function, AMF) network element, a session management function (session management function, SMF) network element, a user plane function (user plane function, UPF) network element, a data network (data network, DN), a terminal device, a radio access network (radio access network, RAN) node, and an operation, administration and maintenance (operation, administration and maintenance, OAM) network element. The RAN node may communicate with the AMF network element and the UPF network element, and the terminal device may communicate with the AMF network element. The terminal device and the RAN node may communicate with each other by using an air interface technology.

In FIG. 1, N1 is an interface between the terminal device and the AMF network element, N2 is an interface between the RAN node and the AMF network element, N3 is an interface between the RAN node and the UPF network element, N4 is an interface between the SMF network element and the UPF network element, and N6 is an interface between the UPF network element and the DN. Namf is a service-based interface provided by the AMF network element, Nsmf is a service-based interface provided by the SMF network element, Nudm is a service-based interface provided by the UDM network element, Nnef is a service-based interface provided by the NEF network element, Nnrf is a service-based interface provided by the NRF network element, Nnwdaf is a service-based interface provided by the NWDAF network element, Naf is a service-based interface provided by the AF network element, Npcf is a service-based interface provided by the PCF network element, and Nudr is a service-based interface provided by the UDR network element.

The NWDAF network element may provide a data analytics function for a network function (network function, NF) in a 5G core (5G core, 5GC) network and/or for the OAM network element. For example, the 5GC NF or the OAM network element may request a network data analytics result from the NWDAF network element. After receiving the request, the NWDAF network element collects data from a related network element, trains an artificial intelligence (artificial intelligence, AI) model or a machine learning (machine learning, ML) model, performs data inference by using the model, and feeds back an inference result to the corresponding 5GC NF or OAM network element. It may be understood that, based on different functions, the NWDAF network element may be classified into an NWDAF (that is, NWDAF (MTLF)) network element supporting training and an NWDAF (that is, NWDAF (AnLF)) network element supporting inference. Optionally, the NWDAF (AnLF) network element may request AI model information from the NWDAF (MTLF) network element, to perform data inference. If the NWDAF network element intends to obtain data related to the terminal device by using the OAM network element, the NWDAF network element may access a minimization of drive tests (minimization of drive tests, MDT) network element. Because the MDT network element belongs to the OAM network element, the MDT network element may directly interact with the OAM network element, to indirectly access the OAM network element by accessing the MDT network element. For example, the NWDAF network element may subscribe to information related to the terminal device from the MDT network element, to collect OAM data reported by an MDT RAN node side.

The AF network element may act on behalf of an application, to interact with another control network element in the 5G network, including providing a service QoS requirement, a routing policy requirement, and the like. For example, when the AF network element needs to obtain information from the 5G core network, the AF network element may obtain required information by accessing the NEF network element without considering an internal topology structure of the 5G core network. Therefore, it can be learned that the NEF network element functions as a guide for the AF network element.

The PCF network element is mainly configured to manage a policy rule, manage user subscription information, and the like.

The UDR network element is used by the UDM to store subscription data or read subscription data, and used by the PCF to store policy data or read policy data.

Optionally, the communication system shown in FIG. 1 may further include a management data analytics function (management data analytics function, MDAF) network element (not shown in FIG. 1). Through data analytics, the MDAF can assist a management system in setting a proper network topology parameter for network configuration, and enhance intelligent operation of management plane data related to operations and maintenance, thereby ensuring service quality.

The terminal device is a device having a wireless transceiver function. The terminal device may be deployed on land, including an indoor device, an outdoor device, a handheld device, or a vehicle-mounted device; may be deployed on a water surface (for example, on a ship); or may be deployed in the air (for example, on an aircraft, a balloon, or a satellite). The terminal device may also be referred to as a terminal. The terminal device may be a user equipment (user equipment, UE), a mobile station (mobile station, MS), a mobile terminal (mobile terminal, MT), or the like, or may be a device configured to provide voice or data connectivity for a user. The UE includes a handheld device having a wireless communication function, a vehicle-mounted device (for example, a vehicle, a bicycle, an electric vehicle, an airplane, a ship, a train, or a high-speed railway), a wearable device (for example, a smartwatch, a smart band, or a pedometer), or a compute device. For example, the UE may be a mobile phone (mobile phone), a tablet computer, a notebook computer, a palmtop computer, a mobile internet device (mobile internet device, MID), a satellite terminal device, or a computer having a wireless transceiver function. The UE may alternatively be a virtual reality (virtual reality, VR) terminal device, an augmented reality (augmented reality, AR) terminal device, a wireless modem (modem), a smart point of sale (point of sale, POS) machine, customer premises equipment (customer premises equipment, CPE), a smart robot, a robot arm, a workshop device, a smart home device (for example, a refrigerator, a television, an air conditioner, or an electricity meter), a wireless terminal device in industrial control, a wireless terminal device in self-driving, a wireless terminal device in telemedicine, a wireless terminal device in a smart grid (smart grid), a wireless terminal device in transportation security, a wireless terminal device in a smart city (smart city), a wireless terminal device in a smart home (smart home), a vehicle-mounted terminal device, a road side unit (road side unit, RSU) having a terminal device function, a flight device (for example, a smart robot, a hot air balloon, an uncrewed aerial vehicle, or an airplane), or the like. Alternatively, the terminal device may be another device having a terminal device function. For example, the terminal device may be a device that functions as a terminal device in device-to-device (device-to-device, D2D) communication.

By way of example, and not limitation, in this application, the terminal device may be a wearable device. The wearable device may also be referred to as a wearable intelligent device, and is a general term for wearable devices intelligently designed and developed for daily wear by applying a wearable technology, for example, glasses, gloves, watches, clothing, and shoes. The wearable device is a portable device that can be directly worn on the body or integrated into clothes or an accessory of a user. For example, the wearable device is not only a hardware device, but also a device that implements a powerful function through software support, data exchange, and cloud interaction. In a broad sense, wearable intelligent devices include full-featured and large-sized devices that can implement all or some of functions without depending on smart phones, for example, smart watches or smart glasses, and include devices that are dedicated to only one type of application function and need to work with other devices such as smart phones, for example, various smart bands or smart jewelry for monitoring physical signs.

In this application, the terminal device may be a terminal device in an internet of things (internet of things, IoT) system. An IoT is an important part in development of future information technologies. A main technical feature of the IoT is to connect an object to a network by using a communication technology, to implement an intelligent network of human-machine interconnection and thing-thing interconnection. The terminal device in this application may be a terminal device in machine-type communication (machine-type communication, MTC). The terminal device in this application may be a vehicle-mounted module, a vehicle-mounted component, a vehicle-mounted chip, or a vehicle-mounted unit that is built in a vehicle as one or more components or units. The vehicle uses the vehicle-mounted module, the vehicle-mounted component, the vehicle-mounted chip, or the vehicle-mounted unit that is built in the vehicle, to implement a method in this application. The terminal device in this application may be a means of transportation, for example, a vehicle. Therefore, this application may be applied to an internet of vehicles, for example, vehicle-to-everything (vehicle-to-everything, V2X), long term evolution-vehicle (long term evolution-vehicle, LTE-V), and vehicle-to-vehicle (vehicle-to-vehicle, V2V).

A form of the terminal device is not limited in this application. An apparatus configured to implement a function of the terminal device may be a terminal device, or may be an apparatus, for example, a chip system, that supports the terminal device in implementing the function. The apparatus may be mounted in the terminal device or used in cooperation with the terminal device.

The RAN node may be a device having a wireless transceiver function, and may assist the terminal device in implementing wireless access. The RAN node in this application may also be referred to as a node in a RAN, a RAN node, an access network device, or the like. The RAN node includes but is not limited to: an evolved NodeB (NodeB, eNB, or e-NodeB, evolved NodeB) in LTE, a next-generation evolved NodeB (next-generation eNB, ng-eNB) in LTE, a base station (gNodeB or gNB) in NR, a transmission point (transmission point, TP) or a transmission reception point (transmission reception point, TRP), an evolved base station in 3GPP, a next-generation NodeB (next-generation NodeB, gNB), a next-generation base station in a 6G mobile communication system, a base station in a future mobile communication system, a satellite, an access node in a Wi-Fi system, a wireless relay node, a wireless backhaul node, an integrated access and backhaul (integrated access and backhaul, IAB) node, or a RAN node that is in a non-terrestrial network (non-terrestrial network, NTN) communication system of a mobile switching center and that may be deployed on a high-altitude platform or a satellite, or the like. A base station may be a macro base station, a micro base station, a pico base station, a small cell, a relay station, a balloon station, or the like. A plurality of base stations supports networks using a same technology mentioned above, or supports networks using different technologies mentioned above.

The base station may include one or more co-site or non-co-site TRPs. Alternatively, the RAN node may be a device that functions as a base station in D2D communication, internet of vehicles communication, uncrewed aerial vehicle communication, or machine communication. Alternatively, the RAN node may be a radio controller in a cloud radio access network (cloud radio access network, CRAN) scenario. Alternatively, the RAN node may be a central unit (central unit, CU), a distributed unit (distributed unit, DU), a CU-control plane (control plane, CP), a CU-user plane (user plane, UP), a radio unit (radio unit, RU), a road side unit (road side unit, RSU) having a base station function, a wired access gateway, a core network element, or the like. Alternatively, the RAN node may be a server, a wearable device, a machine communication device, a vehicle-mounted device, or the like. For example, the RAN node in a V2X technology may be an RSU. An example in which the RAN node is a base station is used below for description. A plurality of RAN nodes may be base stations of a same type, or may be base stations of different types. The base station may communicate with the terminal device, or may communicate with the terminal device via a relay station. The terminal device may communicate with a plurality of base stations using different technologies. For example, the terminal device may communicate with a base station supporting an LTE network, or may communicate with a base station supporting a 5G network, and may further support dual connections to a base station in the LTE network and a base station in the 5G network.

In this application, the CU and the DU may be separately disposed or included in a unit, for example, included in a radio remote unit (remote radio unit, RRU) or an active antenna unit (active antenna unit, AAU), or may be included in a same network element, for example, a baseband unit (baseband unit, BBU). The RU may be included in a radio frequency device or a radio frequency unit or a remote radio head (remote radio head, RRH). It may be understood that the CU may be classified as a RAN node in an access network, or the CU may be classified as a RAN node in a core network. This is not limited herein.

In different systems, the CU (or the CU-CP and the CU-UP), the DU, or the RU may also have different names, but a person skilled in the art may understand meanings thereof. For example, in an open radio access network (open radio access network, ORAN) system, the CU may alternatively be referred to as an O-CU (open CU), the DU may alternatively be referred to as an O-DU, the CU-CP may alternatively be referred to as an O-CU-CP, the CU-UP may alternatively be referred to as an O-CU-UP, and the RU may alternatively be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

It may be understood that, in some scenarios, roles of the RAN node and the terminal device are relative to each other. For example, a helicopter or an uncrewed aerial vehicle usually configured as a terminal device may be alternatively configured as a mobile base station, and a device that accesses a RAN node by using the helicopter or the uncrewed aerial vehicle is configured as a terminal device.

A form of the RAN node is not limited in this application. An apparatus configured to implement a function of the RAN node may be a RAN node, or may be an apparatus, for example, a chip system, that supports the RAN node in implementing the function. The apparatus can be mounted in the RAN node, or used in cooperation with the RAN node.

After the terminal device accesses a communication network shown in FIG. 1, data may be transferred between the terminal device and the AF network element via the communication network, so that the terminal device uses a function service provided by the AF network element. Specifically, the terminal device may access the NWDAF network element, the PCF network element, or the like as shown in FIG. 1, to invoke the AF network element to transfer data, for example, transfer background data. In a background data transfer scenario, a type of network element (for example, the NWDAF network element or the PCF network element) having policy formulation and analytics capabilities may customize, for the terminal device, a policy for transferring background data between the terminal device and the AF network element, so that the background data is transferred between the terminal device and the AF network element. Transferring the background data according to a network-defined background data transfer policy may result in high network energy consumption.

To resolve the foregoing technical problem, embodiments of this application provide a communication method. According to the communication method, after a first network element receives, from an application function network element, a first request used for requesting a policy for transferring background data, the first network element sends, to the application function network element, a first response used for responding to the first request, where the first response includes at least one first policy and an energy consumption parameter corresponding to each first policy. After receiving the first response, the application function network element may select a second policy from the first policy based on the energy consumption parameter corresponding to each first policy, and the background data is transferred between the application function network element and the terminal device according to the second policy. Because the second policy is selected based on the energy consumption parameter, transferring the background data between the application function network element and the terminal device via a network according to the second policy helps reduce network energy consumption.

The communication method provided in embodiments of this application may be applied to a communication system 20 shown in FIG. 2. In FIG. 2, the communication system 20 may include a first network element 201 and an application function network element 202 communicatively connected to the first network element 201. Optionally, the communication system 20 may further include a second network element 203 communicatively connected to the first network element 201. The second network element 203 may be any network element that can provide first information.

In FIG. 2, the application function network element 202 may send, to the first network element 201, a first request used for requesting a policy, where the policy is used for transferring background data between the application function network element 202 and a terminal device. After the first network element 201 receives the first request, the first network element 201 sends, to the application function network element, a first response used for responding to the first request, where the first response includes at least one first policy and an energy consumption parameter corresponding to each of the at least one first policy. Then, the application function network element 202 determines a second policy from the first policy based on the first response, and transfers the background data according to the second policy. For example, the first network element 201 may be a PCF network element or an NWDAF network element.

Optionally, the first network element 201 may send, to the second network element 203, a request for generating the first response (where the request may carry information used for generating the first response). For example, the first network element 201 may be the PCF in the communication system shown in FIG. 1, and the second network element 203 may be the NWDAF network element having a model training logical function (model training logical function, MTLF) in the communication system shown in FIG. 1, an energy exposure network element, or the like. After receiving the request for generating the first response, the second network element 203 generates the first response, and feeds back the first response to the first network element 201.

In a possible implementation, the communication system 20 shown in FIG. 2 may be used in a current 5G network, another future network, or the like. This is not specifically limited in embodiments of this application.

It may be understood that, if the communication system 20 shown in FIG. 2 is used in the 5G network shown in FIG. 1, a network element or an entity corresponding to the first network element 201 in FIG. 2 may be the NWDAF (AnLF) network element, the PCF network element, or the like in the 5G network architecture; and a network element or an entity corresponding to the second network element 203 in FIG. 2 may be the NWDAF (MTLF) network element, the MDAF network element, or the like in the 5G network architecture. It should be understood that, during specific application, the first network element 201 or the second network element 203 in FIG. 2 may also correspond to another network element in the 5G network. This is not limited.

With reference to the foregoing communication systems, the following further describes the communication method provided in embodiments of this application.

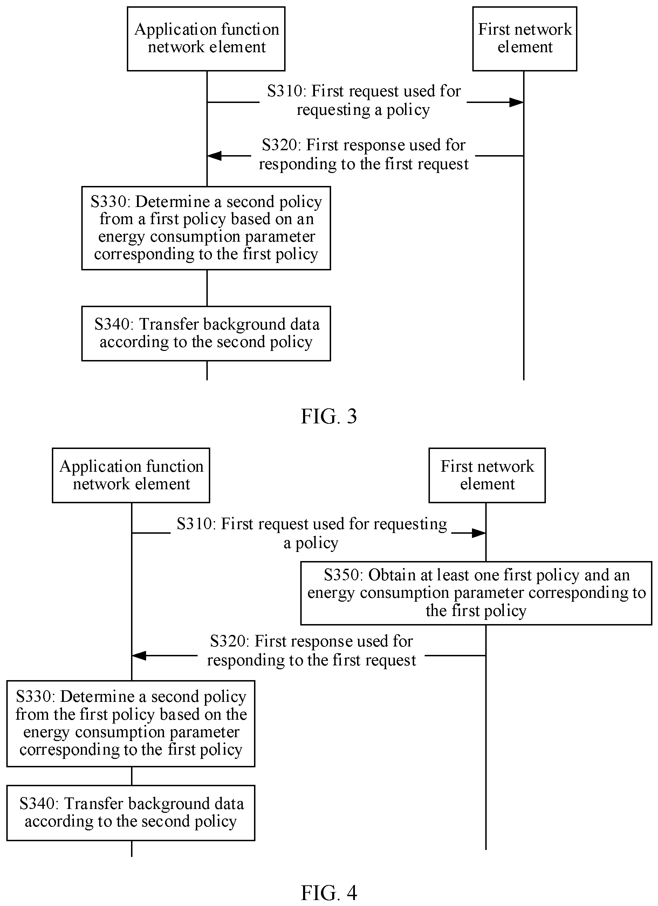

FIG. 3 is a schematic flowchart of a communication method according to an embodiment of this application. As shown in FIG. 3, the method may include the following steps.

S310: An application function network element sends, to a first network element, a first request used for requesting a policy. Correspondingly, the first network element receives, from the application function network element, the first request used for requesting the policy.

Optionally, the first network element is a type of network element having policy formulation and analytics capabilities, or the first network element is a type of network element that can communicate with a type of network element having policy formulation and analytics capabilities. For example, the first network element may be a PCF network element or an NWDAF network element.

The policy requested by the application function network element may be used for transferring background data between the application function network element and a terminal device, or the policy may be further used for transferring the background data between the application function network element and the terminal device via a network to which the first network element belongs. In other words, in a scenario, the policy is used for transferring the background data between the application function network element and the terminal device via the network to which the first network element belongs. In another scenario, the policy is used for forwarding the background data between the application function network element and the terminal device via the network to which the first network element belongs.

The policy requested by the application function network element specifies a time window for transferring the background data. Time windows for transferring the background data specified in different policies are generally different. In different time windows, load and energy supply conditions of a network to which the application function network element and the first network element belong may be different. Therefore, energy efficiency (energy efficiency, EE) may be different when the background data is transferred in the different time windows. For example, in a time window A, the network carries a large number of services with high time-sensitivity requirements to be transferred, a small number of communication resources can be provided for background data transfer, and energy supply is from non-renewable energy. In a time window B, the network carries a small number of services with high time-sensitivity requirements to be transferred, a large number of communication resources can be provided for background data transfer, and energy supply is from renewable energy. Therefore, energy efficiency of background data transfer in the time window A is different from energy efficiency of background data transfer in the time window B, and the energy efficiency of background data transfer in the time window B is higher. Therefore, by using the first request to request a policy and corresponding energy consumption or energy efficiency, the application function network element may select a policy with lower energy consumption or higher energy efficiency for background data transfer, thereby achieving energy savings.

In an implementation, the first request is described by using an example in which the terminal device is a UE. The first request may include second indication information, and the second indication information includes:
an identifier of an application that needs to transfer background data (for example, an application service provider identifier, ASP ID);
a number of UEs to which the application function network element needs to send the background data (for example, a number of UEs);
a desired time window for background data transfer (for example, a desired time window);
an optional UE identifier (for example, an optionally external group identifier);
network area information (for example, network area information);
information for requesting notification (for example, a request for notification), where after policy negotiation is completed, when a policy change is required, the first network element may trigger a policy change based on the information; and
information about a MAC address or an IP 3-tuple of a server of an application function network element for background data transfer (MAC address or IP 3-tuple of application server).

For example, the first request including the second indication information may be a policy negotiation request in policy negotiation for background traffic transmission. In this case, for the second indication information in the policy negotiation request, refer to detailed descriptions in a related technology. Details are not described herein again.

The first request may be further reconstructed and designed on the basis of the policy negotiation request. For example, the first request may further include first indication information, and the first indication information indicates that the network is to use renewable energy to transfer the background data (renewable energy indication). Based on the first indication information, at least one first policy that matches the first request and that is determined by the first network element may include a first time window, and the renewable energy is available to the network in the first time window. Performing data transfer in a time window using the renewable energy can achieve energy savings.

Further, the first indication information may directly indicate a desired ratio of the renewable energy used for transferring the background data (renewable energy ratio threshold). In other words, a ratio of the renewable energy of the policy requested for transferring the background data shall not be lower than the desired ratio of the renewable energy.

In an implementation, for similar energy-saving considerations, the first request may be further designed as follows: The first request may further include third indication information, and the third indication information indicates an energy indication used for background data transfer. For example, the third indication information may include at least one piece of the following information: a total energy budget (total energy budget) for background data transfer, an energy budget per terminal device (energy budget per UE) for background data transfer, or an energy saving indication for background data transfer (energy saving indication). Based on the third indication information, each of the at least one first policy that matches the first request and that is determined by the first network element can meet the energy indication indicated by the third indication information. For example, estimated energy consumption corresponding to the first policy is less than an energy budget, or estimated energy consumption corresponding to the first policy is low, thereby achieving energy savings.

S320: The first network element sends, to the application function network element, a first response used for responding to the first request. Correspondingly, the application function network element receives the first response from the first network element.

After receiving the first request, the first network element may determine the at least one first policy matching the first request and a corresponding energy consumption parameter, and send the first response including the first policy and the corresponding energy consumption parameter to the application function network element. The energy consumption parameter corresponding to the first policy includes at least one of the following: energy consumed for transferring the background data via the network when the background data is transferred between the application function network element and the terminal device according to the first policy, energy efficiency of transferring the background data via the network when the background data is transferred between the application function network element and the terminal device according to the first policy, energy estimated to be consumed for transferring a specified data volume of the background data via the network when the background data is transferred between the application function network element and the terminal device according to the first policy, or energy consumed by the network when the background data is transferred between the application function network element and the terminal device via the network according to the first policy.

The consumed energy (referred to as energy consumption for short) may be energy used for achieving a specific system objective, and may be expressed in units such as joules (J) or watt-hours (Wh). The energy consumed for transferring the background data may be energy required for transferring complete background data between all terminal devices and the application function network element, or may be energy required for transferring a part of background data for each terminal device.

The energy efficiency (referred to as energy efficiency for short) is a level of an economic output or an economic benefit generated by energy used in a specific period of time. Specifically, the energy efficiency is an important indicator for measuring energy utilization efficiency, and reflects a degree to which energy is effectively used. The following further describes energy efficiency in different scenarios.

When an effective output in a communication scenario is a data volume, the energy efficiency may be understood as a quotient obtained by dividing a volume of transferred data by consumed energy, expressed as: $Energy efficiency = \frac{data volume}{energy consumption} .$

Similarly, when an effective output is a delay, the energy efficiency may be understood as a reciprocal of a product of an average delay of a network (slice) and energy consumption, expressed as: $Energy efficiency = \frac{1}{average delay of network \left(or slice\right) \times energy consumption} .$

Similarly, when an effective output is a number of users, the energy efficiency may be understood as a quotient obtained by dividing a total number of users on a network (or slice) by energy consumption, expressed as: $Energy efficiency = \frac{total number of users on network \left(or slice\right)}{energy consumption} .$

In this embodiment of this application, in an application scenario in which the background data is transferred, an effective output is a data volume. In this scenario, for example, the energy efficiency may include an energy efficiency level, and/or a data volume of background data transferred via the network per unit of energy. For example, the energy efficiency may be shown in Table 1.

**Table 1**

| Energy efficiency | |
|---|---|
| Data volume of background data transferred per unit of energy | Energy efficiency level (EE level) |
| 5 M/J | level 1 |
| 6 M/J | level 2 |
| 8 M/J | level 3 |

In an implementation, refer to the description in S310. The first request includes the first indication information indicating the renewable energy. In this scenario, the first response may further include: a ratio of the renewable energy to energy used for transferring the background data via the network (estimation renewable energy ratio) when the background data is transferred between the application function network element and the terminal device according to the first policy; and/or second information, where the second information indicates whether the energy used for transferring the background data via the network includes the renewable energy when the background data is transferred between the application function network element and the terminal device according to the first policy.

In the foregoing descriptions, the first policy and the energy consumption parameter are separately described. It should be understood that the energy consumption parameter may be included in the first policy. This is not limited.

The following further describes the first response with reference to a specific example. In an example, as shown in Table 2, the first response includes the first policy and the corresponding energy consumption parameter. The first policy defines a time window for transferring the background data.

**Table 2**

| First response | |
|---|---|
| First policy | Energy consumption parameter |
| 06:00 to 10:00 | level 1 and/or 5 M/J |
| 10:00 to 14:00 | level 2 and/or 6 M/J |
| 00:00 to 06:00 | level 3 and/or 6 M/J |

In the example shown in Table 2, time (also referred to as a time window) for transferring background data indicated by each first policy is 06:00 to 10:00, 10:00 to 14:00, and 00:00 to 06:00; and for corresponding energy consumption parameters, energy efficiency levels include level 1, level 2, and level 3, and data volumes of background data transferred per unit of energy include 5 M/J, 6 M/J, and 6 M/J.

In another example, as shown in Table 3, the first response includes the first policy, the energy consumption parameter corresponding to the first policy, and a renewable energy indication. In the foregoing descriptions, the renewable energy indication may include: the ratio of the renewable energy to the energy used for transferring the background data via the network when the background data is transferred between the application function network element and the terminal device according to the first policy; and/or whether the energy used for transferring the background data via the network includes renewable energy when the background data is transferred between the application function network element and the terminal device according to the first policy.

**Table 3**

| First response | | |
|---|---|---|
| First policy | Energy consumption parameter | Renewable energy indication |
| 06:00 to 10:00 | level 1 and/or 5 M/J | Include the renewable energy and/or a renewable energy ratio of 50% |
| 10:00 to 14:00 | level 2 and/or 6 M/J | Include the renewable energy and/or a renewable energy ratio of 80% |
| 00:00 to 06:00 | level 3 and/or 6 M/J | Does not include the renewable energy and/or a renewable energy ratio of 0% |

In the example shown in Table 3, each first policy and the corresponding energy consumption parameter are the same as those in the example shown in Table 2. Details are not described again. In comparison with the example shown in Table 2, the first response in the example shown in Table 3 further includes the renewable energy indication. In the example shown in Table 3, the renewable energy indications respectively corresponding to the first policies (06:00 to 10:00, 10:00 to 14:00, and 00:00 to 06:00) are: Include the renewable energy and/or the renewable energy ratio of 50%, include the renewable energy and/or the renewable energy ratio of 80%, and does not include the renewable energy and/or the renewable energy ratio of 0%.

It should be understood that the foregoing descriptions of the first response is examples for description. During specific implementation, the first response may have another design. This is not limited.

S330: The application function network element determines a second policy from the first policy based on the energy consumption parameter corresponding to the first policy.

After receiving the first response, the application function network element may determine the second policy from the first policy for an energy-saving objective. A mechanism for determining the second policy by the application function network element may be flexibly set. For example, a first policy with lowest energy consumption may be determined as the second policy. Alternatively, a first policy with a highest ratio of used renewable energy may be determined as the second policy. Alternatively, a first policy with lowest energy consumption in a plurality of first policies that use renewable energy may be determined as the second policy.

It should be understood that the foregoing mechanism for determining the second policy is an example for description. During specific implementation, there may be another design. This is not limited.

S340: The application function network element transfers the background data according to the second policy.

After determining the second policy, the application function network element may transfer the background data according to the second policy. Energy-saving transfer of the background data can be implemented.

In this embodiment of this application, after the first network element receives, from the application function network element, the first request used for requesting the policy for transferring the background data, the first network element sends, to the application function network element, the first response used for responding to the first request, where the first response includes the at least one first policy and the energy consumption parameter corresponding to each first policy. After receiving the first response, the application function network element may select the second policy from the first policy based on the energy consumption parameter corresponding to each first policy, and the background data is transferred between the application function network element and the terminal device according to the second policy. Because the second policy is a first policy with lower energy consumption and selected based on the energy consumption parameter, transferring the background data according to the second policy can achieve energy savings.

In an embodiment, as shown in FIG. 4, the method may further include the following step.

S350: The first network element obtains the at least one first policy and the energy consumption parameter corresponding to the first policy.

The first network element may pre-cache the first information indicating energy efficiency of transferring the data via the network in each time period, or the first network element may further obtain the first information from another network entity. The first information may be used for obtaining the at least one first policy and the energy consumption parameter corresponding to the first policy. In other words, S350 may include: determining, based on the first information, the at least one first policy and the energy consumption parameter corresponding to the first policy.

In a scenario in which the first network element obtains the first information from the another network entity, after receiving the first request in S310, the first network element may obtain the first information by using the following steps: The first network element sends, to the second network element, a third request used for requesting the energy efficiency of transferring the data via the network in each time period (that is, the first information); and the first network element receives the first information from the second network element. For example, in the scenario, the first network element may be a PCF network element, and the second network element may be an NWDAF network element.

The third request may be determined based on the first request. For example, the following information included in the third request may be determined based on corresponding information in the first request:
information for subscribing to energy efficiency analytics and/or energy consumption analytics from the NWDAF network element, an identifier of an application that needs to transfer background data, specific UEs to which the application function network element needs to transfer data, a desired time window for background data transfer, and a data volume of data transferred between the application function network element and the UE.

Specifically, the following information in the first request and the third request may be consistent: the information for subscribing to energy efficiency analytics and/or energy consumption analytics from the NWDAF network element, the identifier of the application that needs to transfer background data, the specific UEs to which the application function network element needs to transfer background data, and the data volume of data transferred between the application function network element and the UE. The "desired time window for background data transfer" in the third request may be a "desired time window for background data transfer" in the first request adjusted by the first network element with reference to factors such as a network status. For example, the desired time window for background data transfer in the third request is a time window obtained by extending the desired time window for background data transfer in the third request.

That the first network element obtains the at least one first policy and the energy consumption parameter corresponding to the first policy matches the first request in step S310. For example, as described in step S310, the first request includes second request information. Optionally, the first request may further include first indication information indicating renewable energy and/or third indication information indicating an energy budget. If the first request includes second indication information, the at least one first policy determined by the first network element should meet the desired time window for background data transfer in the second indication information. For another example, if a second request includes the first indication information, the determined at least one first policy should use renewable energy. In another example, if the first request includes the third indication information, it is determined that the energy consumption parameter corresponding to the at least one first policy does not exceed the energy budget indicated by the third indication information.

It should be understood that the foregoing examples of principles for determining the at least one first policy may be used in combination. For example, the determined first policy may meet at least two of the first indication information, the second indication information, and the third indication information. This is not limited.

In this embodiment of this application, the at least one first policy and the energy consumption parameter corresponding to the first policy that are obtained by the first network element match the first request of the application function network element, so that the obtained first policy can achieve energy savings.

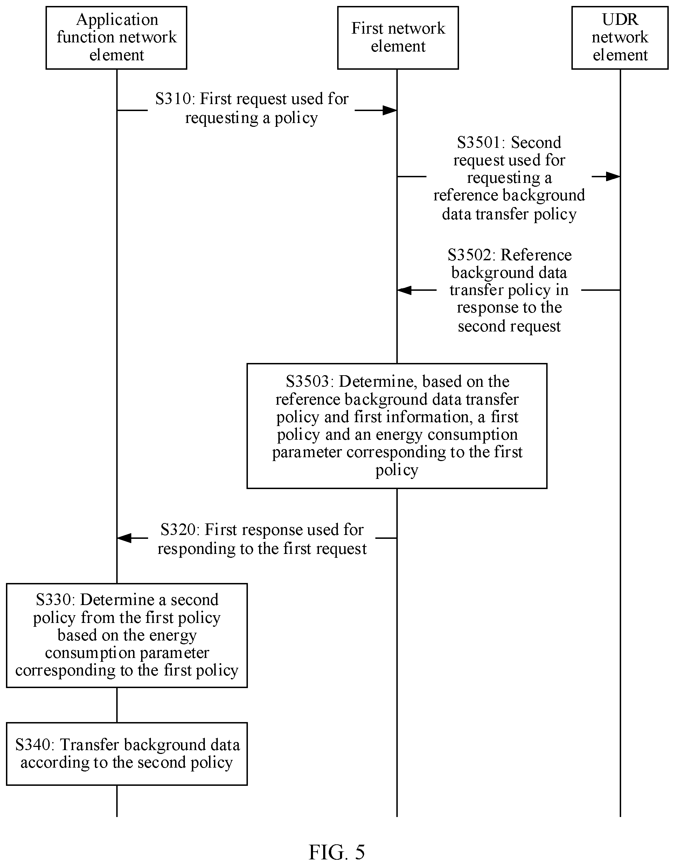

In an embodiment, as shown in FIG. 5, S350 may include the following steps.

S3501: The first network element sends, to a UDR, a second request used for requesting a reference background data transfer policy. Correspondingly, the UDR receives the second request.

The reference background data transfer policy is a background data transfer policy related to an ASP and stored in the UDR. The UDR may store reference background data transfer policies used for transferring previous background data. These reference background data transfer policies may be used as references for determining the policy requested in step S310, and help accurately and quickly determine the policy requested in step S310.

It should be understood that the reference background data transfer policy may have another name. This is not limited.

S3502: The UDR sends, to the first network element, the reference background data transfer policy in response to the second request. Correspondingly, the first network element receives the reference background data transfer policy.

After receiving the second request, the UDR determines the reference background data transfer policy stored in the UDR, and sends the reference background data transfer policy to the first network element.

S3503: The first network element determines the first policy and the energy consumption parameter corresponding to the first policy based on the reference background data transfer policy and the first information.

The first network element is a type of network element having policy formulation and analytics functions, and may first determine the first policy based on the reference background data transfer policy and the first information, and estimate the energy consumption parameter corresponding to the first policy.

In this embodiment of this application, the first network element determines the first policy and the energy consumption parameter corresponding to the first policy based on the reference background data transfer policy and the first information, so that the first policy and the energy consumption parameter corresponding to the first policy can be accurately and efficiently determined.

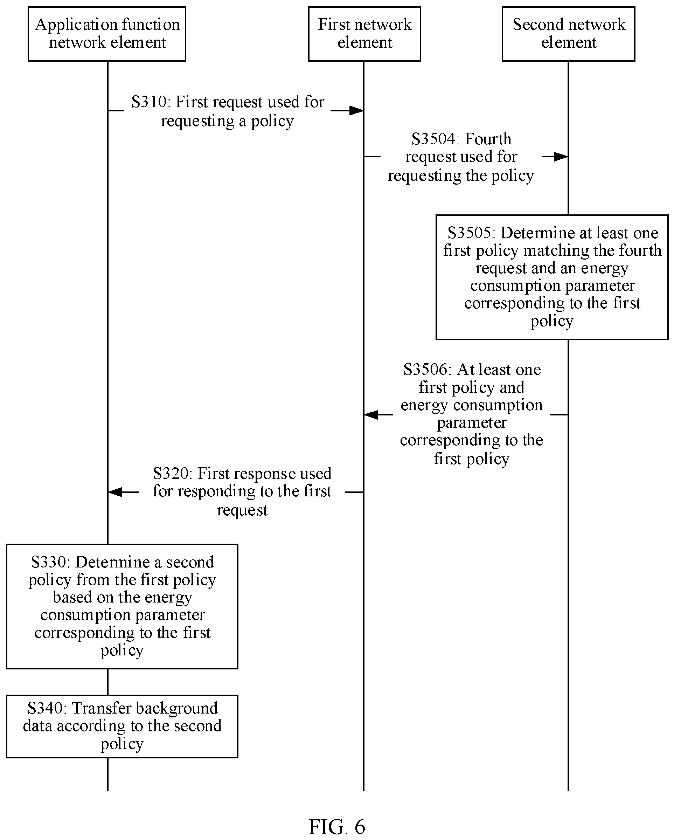

In an embodiment, as shown in FIG. 6, S350 may further include the following steps.

S3504: The first network element sends, to the second network element, a fourth request used for requesting the policy. Correspondingly, the second network element receives the fourth request from the first network element.

In a scenario in which the first network element needs to obtain the policy from the second network element, in an example, the first network element may be a PCF network element, and the second network element may be an NWDAF network element. The fourth request may be determined based on the first request in step S310. For example, the fourth request may include the following three pieces of information: the first indication information and the third indication information in the first request, and the desired time window for background data transfer in the second indication information (or a desired time window for background data transfer in modified second indication information).

It should be understood that the foregoing descriptions of determining the fourth request is an example. During specific implementation, there may be another design of the fourth request. This is not limited.

S3505: The second network element determines at least one first policy matching the fourth request and an energy consumption parameter corresponding to the first policy.

The second network element pre-caches the first information indicating the energy efficiency of transferring the data via the network in each time period, and the second network element may determine, based on the first information, the at least one first policy matching the fourth request and the energy consumption parameter corresponding to the first policy.

In an implementation, the second network element may further determine the at least one first policy and the energy consumption parameter corresponding to the first policy based on the reference background data transfer policy and the first information. A detailed determining process is similar to step S3501 to step S3503 in the embodiment shown in FIG. 5. Details are not described again.

S3506: The second network element sends, to the first network element, the at least one first policy and the energy consumption parameter corresponding to the first policy. Correspondingly, the first network element receives, from the second network element, the at least one first policy and the energy consumption parameter corresponding to the first policy.

In this embodiment of this application, the second network element determines the at least one first policy matching the first request sent by the application function network element and the energy consumption parameter corresponding to the first policy, and provides, for the first network element, the at least one first policy and the energy consumption parameter corresponding to the first policy. The first policy can achieve energy savings.

With reference to the foregoing descriptions, it is not difficult to learn that, for the communication method provided in this embodiment of this application, a specific implementation of a background data transfer policy with an energy-saving effect is designed for an energy-saving objective. Specifically, according to the communication method, after the first network element receives, from the application function network element, the first request used for requesting the policy for transferring the background data, the first network element sends, to the application function network element, the first response used for responding to the first request, where the first response includes the at least one first policy and the energy consumption parameter corresponding to each first policy. After receiving the first response, the application function network element may select the second policy from the first policy based on the energy consumption parameter corresponding to each first policy, and the background data is transferred between the application function network element and the terminal device according to the second policy. Because the second policy is selected based on the energy consumption parameter, transferring the background data according to the second policy can achieve energy savings.

The foregoing mainly describes the solutions provided in embodiments of this application from a perspective of execution logic of each step. For ease of understanding, the following further describes, in a specific implementation scenario with reference to a plurality of architectures of the communication system shown in FIG. 1 in embodiments of this application, the communication method provided in this application. In the following descriptions, for descriptions and beneficial effects of steps, refer to descriptions of corresponding steps in the embodiments in FIG. 3 to FIG. 6 in embodiments of this application. Details are not described herein again, but the descriptions are mainly from specific implementation of a procedure, to help better understand the communication method in this application.

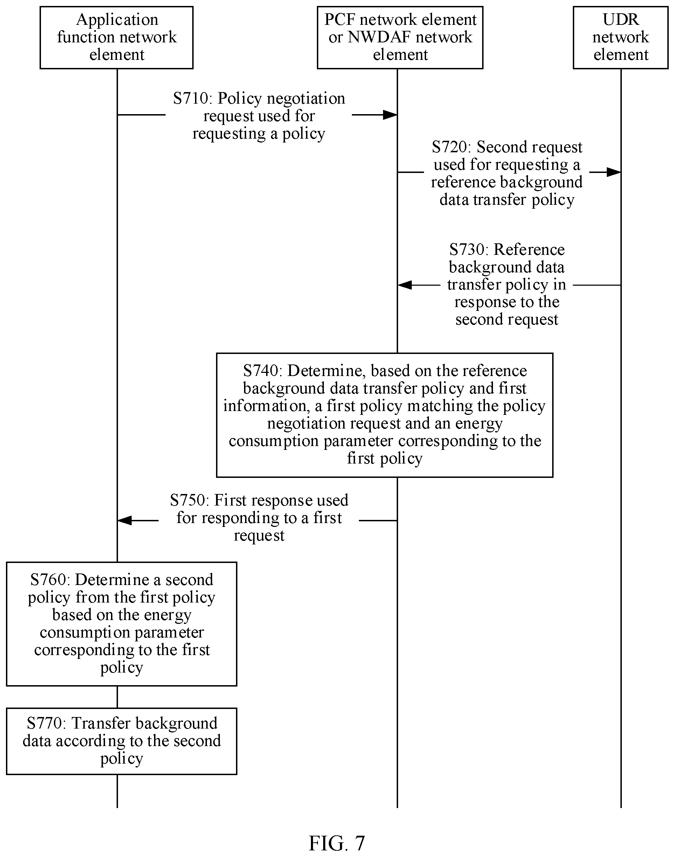

In an embodiment, the first network element is a PCF network element or an NWDAF network element, the PCF network element or the NWDAF network element stores first information indicating energy efficiency of transferring data via a network in each time period, and the PCF network element or the NWDAF network element obtains a reference background data transfer policy from a UDR network element. FIG. 7 is a schematic flowchart of a communication method in this scenario. As shown in FIG. 7, the method may include the following steps.

S710: An application function network element sends, to a PCF network element or an NWDAF network element, a policy negotiation request used for requesting a policy. Correspondingly, the PCF network element or the NWDAF network element receives, from the application function network element, the policy negotiation request used for requesting the policy.

The policy negotiation request may be the first request in step S310 in the embodiment shown in FIG. 3.

S720: The PCF network element or the NWDAF network element sends, to a UDR network element, a second request used for requesting a reference background data transfer policy. Correspondingly, the UDR network element receives the second request.

For descriptions of the second request, refer to the descriptions of the second request in the embodiment shown in FIG. 5. Details are not described again.

S730: The UDR network element sends, to the PCF network element or the NWDAF network element, the reference background data transfer policy in response to the second request. Correspondingly, the PCF network element or the NWDAF network element receives the reference background data transfer policy.

After receiving the reference background data transfer policy, the PCF network element or the NWDAF network element may use the reference background data transfer policy to determine a first policy.

S740: The PCF network element or the NWDAF network element determines, based on the reference background data transfer policy and first information, a first policy matching the policy negotiation request and an energy consumption parameter corresponding to the first policy.

The first information may include each time window and energy efficiency corresponding to each time window. For example, each time window and the energy efficiency corresponding to each time window may be shown in Table 4.

**Table 4**

| Time window | Energy efficiency | |
|---|---|---|
| | Data volume of data transferred per unit of energy | Energy efficiency level (EE level) |
| 06:00 to 10:00 | 5 M/J | level 1 |
| 10:00 to 14:00 | 6 M/J | level 2 |
| 00:00 to 06:00 | 8 M/J | level 3 |

When the PCF network element or the NWDAF network element determines the first policy and the energy consumption parameter corresponding to the first policy based on the first information and the reference background data transfer policy, the PCF network element or the NWDAF network element selects, for the application function network element, a time window with highest energy efficiency (for example, "00:00 to 06:00" in the example shown in Table 4) as the first policy based on energy efficiency of different time windows and the reference background data transfer policy obtained from the UDR network element; or determines, as the first policy, a plurality of time windows whose estimated energy consumption is lower than an energy consumption budget in the policy negotiation request in S710.

For example, the energy consumption budget in the policy negotiation request in S710 is an energy budget for transferring the background data by each terminal device. The PCF network element or the NWDAF network element may calculate, based on a data volume of to-be-transferred background data, a number of terminal devices, and a data volume of data transferred per unit of energy when a network is configured to transfer data for each terminal device, energy consumption of a single terminal device for transferring the background data in each time window; and determine, as the first policy, a time window in which the calculated energy consumption of a single terminal device for transferring the background data is less than the energy budget for transferring the background data by each terminal device.

For another example, the energy consumption budget in the policy negotiation request in S710 is a total energy budget for transferring the background data. The PCF network element or the NWDAF network element may estimate, based on a volume of to-be-transferred background data and a data volume of background data transferred per unit of energy, a total energy estimation for transferring the background data; and determine, as the first policy, a time window in which the calculated total energy estimation is less than the total energy budget.

After the first policy is determined, the energy consumption parameter corresponding to the first policy is determined. For several possible designs of the energy consumption parameter, refer to the descriptions of the energy consumption parameter in step S320 in the embodiment shown in FIG. 3. For example, the energy consumption parameter corresponding to the first policy may include at least one of the following: consumed energy or energy efficiency. The consumed energy may have the following possible definitions: energy consumed for transferring the background data via the network when the background data is transferred between the application function network element and the terminal device according to the first policy, energy estimated to be consumed for transferring a specified data volume of the background data via the network when the background data is transferred between the application function network element and the terminal device according to the first policy, or energy consumed by the network when the background data is transferred between an application function and the terminal device via the network according to the first policy. The energy efficiency may be defined as energy efficiency of transferring the background data via the network when the background data is transferred between the application function network element and the terminal device according to the first policy.

S750: The PCF network element or the NWDAF network element sends, to the application function network element, a first response used for responding to the first request. Correspondingly, the application function network element receives the first response from the PCF network element or the NWDAF network element.

The first response includes the first policy and the corresponding energy consumption parameter. For several possible designs of the first response, refer to the descriptions of the first response in step S320 in the embodiment shown in FIG. 3. For example, the first response may include:
the first policy, also referred to as a recommended time window for background data transfer (a recommended time window for background data transfer);
a charging rate corresponding to the first policy (time window) (a reference to a charging rate for this time window);
a maximum bit rate corresponding to the first policy (time window) (optionally a maximum aggregated bit rate);
an energy parameter corresponding to the first policy (time window); and
whether the first policy (time window) is applicable to renewable energy and/or a ratio of used renewable energy to total used energy.

It should be understood that the first response is an example for description. During specific implementation, there may be another design. This is not limited.

S760: The application function network element determines a second policy from the first policy based on the energy consumption parameter corresponding to the first policy.

After receiving the first response, the application function network element may determine the second policy from the first policy for an energy-saving objective. A mechanism for determining the second policy by the application function network element may be flexibly set. For example, a first policy with lowest energy consumption may be determined as the second policy. Alternatively, a first policy with a highest ratio of used renewable energy may be determined as the second policy. Alternatively, a first policy with lowest energy consumption in a plurality of first policies that use renewable energy may be determined as the second policy.

S770: The application function network element transfers the background data according to the second policy.

After determining the second policy, the application function network element may transfer the background data according to the second policy. Energy-saving transfer of the background data can be implemented.

In this embodiment of this application, after the PCF network element or the NWDAF network element receives, from the application function network element, the first request used for requesting the policy for transferring the background data, the PCF network element or the NWDAF network element sends, to the application function network element, the first response used for responding to the first request, where the first response includes the at least one first policy and the energy consumption parameter corresponding to each first policy. After receiving the first response, the application function network element may select the second policy from the first policy based on the energy consumption parameter corresponding to each first policy, and the background data is transferred between the application function network element and the terminal device according to the second policy. Because the second policy is selected based on the energy consumption parameter, transferring the background data according to the second policy can achieve energy savings.

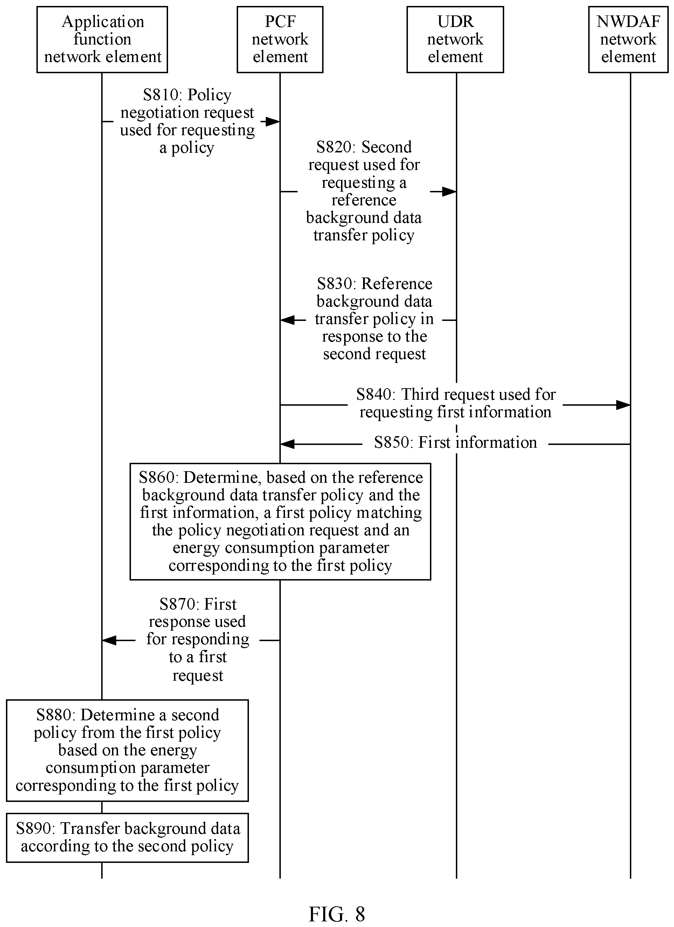

In an embodiment, the first network element is a PCF network element, and the PCF network element does not store first information indicating energy efficiency of transferring data via a network in each time period, but needs to obtain the first information from an NWDAF network element, and obtain a reference background data transfer policy from a UDR network element. FIG. 8 is a schematic flowchart of a communication method in this scenario. As shown in FIG. 8, the method may include the following steps.

S810: An application function network element sends, to a PCF network element, a policy negotiation request used for requesting a policy. Correspondingly, the PCF network element receives, from the application function network element, the policy negotiation request used for requesting the policy.

The policy negotiation request may be the first request in step S310 in the embodiment shown in FIG. 3.

S820: The PCF network element sends, to a UDR network element, a second request used for requesting a reference background data transfer policy. Correspondingly, the UDR network element receives the second request.

For descriptions of the second request, refer to the descriptions of the second request in the embodiment shown in FIG. 5. Details are not described again.

S830: The UDR network element sends, to the PCF network element, the reference background data transfer policy in response to the second request. Correspondingly, the PCF network element receives the reference background data transfer policy.

After receiving the reference background data transfer policy, the PCF network element may use the reference background data transfer policy to determine a first policy.

S840: The PCF network element sends, to an NWDAF network element, a third request used for requesting first information. Correspondingly, the NWDAF network element receives the third request from the PCF network element.

After receiving the third request, the NWDAF network element may collect live network data and analyze the live network data, to determine first information matching the third request. For example, the third request may include:
information for subscribing to energy efficiency analytics and/or energy consumption analytics from the NWDAF network element (for example, analytics ID indicating energy efficiency analytics and/or energy consumption analytics);
an identifier of an application that needs to transfer background data (for example, an ASP identifier);
a UE to which the application function network element needs to transfer data (for example, a UE ID);
a desired time window for background data transfer (for example, a desired time window); and
a data volume (for example, a volume) of data transferred between an application function network element and a UE.

It should be understood that a name of the content of the third request is an example for description, and the content of the third request may have another name. This is not limited.

S850: The NWDAF network element sends the first information to the PCF network element. Correspondingly, the PCF network element receives the first information.

The first information returned by the NWDAF network element may be at a granularity of a terminal device. In other words, the first information includes energy efficiency of each terminal device. For example, the first information may include a terminal device list (UE list) and energy efficiency of each terminal device in the terminal device list in a corresponding policy time window. The terminal device in the terminal device list may be a subset or an entire set of terminal devices indicated by the policy negotiation request in S810. For example, the terminal device list includes a UE 1 and a UE 2, and the first information includes:
the UE list: the UE 1 and the UE 2;
energy efficiency of the UE 1 in corresponding policy time windows:
   a time window 1: energy efficiency 1, renewable energy ratio 1; and a time window 2: energy efficiency 2, renewable energy ratio 2; and
   energy efficiency of the UE 2 in corresponding policy time windows:
      a time window 1: energy efficiency 3, renewable energy ratio 3; and a time window 2: energy efficiency 4, renewable energy ratio 4.

It should be understood that the first information is an example for description. During specific implementation, the first information may be flexibly designed. For example, the estimated energy consumption is added to the first information, or the energy efficiency is replaced with the energy consumption. This is not limited.

It should be understood that a sequence of performing step S820 and step S830 and performing step S840 and step S850 may be flexibly adjusted. This is not limited. In other words, step S840 and step S850 may be performed first, and then step S820 and step S830 are performed.

S860: The PCF network element determines, based on the reference background data transfer policy and the first information, a first policy matching the policy negotiation request and an energy consumption parameter corresponding to the first policy.

The first information may include each time window and energy efficiency corresponding to each time window. For example, the first information may be shown in Table 4, and details are not described again.

When the PCF network element determines the first policy and the energy consumption parameter corresponding to the first policy based on the first information and the reference background data transfer policy, the PCF network element selects, for the application function network element, a time window with highest energy efficiency (for example, "00:00 to 06:00" in the example shown in Table 4) as the first policy based on energy efficiency of different time windows and a reference background data transfer policy obtained from the UDR network element; or determines, as the first policy, a plurality of time windows whose estimated energy consumption is lower than an energy consumption budget in the policy negotiation request in S810.

For example, the energy consumption budget in the policy negotiation request in S810 is an energy budget for transferring the background data by each terminal device. The PCF network element may calculate, based on a data volume of to-be-transferred background data, a number of terminal devices, and a data volume of data transferred per unit of energy when a network is configured to transfer data for each terminal device, energy consumption of a single terminal device for transferring the background data in each time window; and determine, as the first policy, a time window in which the calculated energy consumption of a single terminal device for transferring the background data is less than the energy budget for transferring the background data by each terminal device.

For another example, the energy consumption budget in the policy negotiation request in S810 is a total energy budget for transferring the background data. The PCF network element may estimate, based on a volume of to-be-transferred background data and a data volume of background data transferred per unit of energy, a total energy estimation for transferring the background data; and determine, as the first policy, a time window in which the calculated total energy estimation is less than the total energy budget.

After the first policy is determined, the energy consumption parameter corresponding to the first policy is determined. For several possible designs of the energy consumption parameter, refer to the descriptions of the energy consumption parameter in step S320 in the embodiment shown in FIG. 3. Details are not described again.

For the descriptions of the "consumed energy" in step S320 in the embodiment shown in FIG. 3, the "consumed energy" may be energy consumed by a single terminal device to transfer a specified data volume of the background data via the network, or may be total energy consumed by all terminal devices to transfer a specified data volume of the background data via the network.

S870: The PCF network element sends, to the application function network element, a first response used for responding to the first request. Correspondingly, the application function network element receives the first response from the PCF network element.

The first response includes the first policy and the corresponding energy consumption parameter. For several possible designs of the first response, refer to the descriptions of the first response in step S320 in the embodiment shown in FIG. 3. For example, the first response may include:
the first policy, also referred to as a recommended time window for background data transfer (a recommended time window for background data transfer);
a charging rate corresponding to the first policy (time window) (a reference to a charging rate for this time window);
a maximum bit rate corresponding to the first policy (time window) (optionally a maximum aggregated bit rate);
an energy parameter corresponding to the first policy (time window); and
whether the first policy (time window) is applicable to renewable energy and/or a ratio of used renewable energy to total used energy.

It should be understood that the first response is an example for description. During specific implementation, there may be another design. This is not limited.

S880: The application function network element determines a second policy from the first policy based on the energy consumption parameter corresponding to the first policy.

After receiving the first response, the application function network element may determine the second policy from the first policy for an energy-saving objective. A mechanism for determining the second policy by the application function network element may be flexibly set. For example, a first policy with lowest energy consumption may be determined as the second policy. Alternatively, a first policy with a highest ratio of used renewable energy may be determined as the second policy. Alternatively, a first policy with lowest energy consumption in a plurality of first policies that use renewable energy may be determined as the second policy.

S890: The application function network element transfers the background data according to the second policy.

After determining the second policy, the application function network element may transfer the background data according to the second policy. Energy-saving transfer of the background data can be implemented.

In this embodiment of this application, after the PCF network element receives, from the application function network element, the first request used for requesting the policy for transferring the background data, the PCF network element sends, to the application function network element, the first response used for responding to the first request, where the first response includes the at least one first policy and the energy consumption parameter corresponding to each first policy. After receiving the first response, the application function network element may select the second policy from the first policy based on the energy consumption parameter corresponding to each first policy, and the background data is transferred between the application function network element and the terminal device according to the second policy. Because the second policy is selected based on the energy consumption parameter, transferring the background data according to the second policy can achieve energy savings.

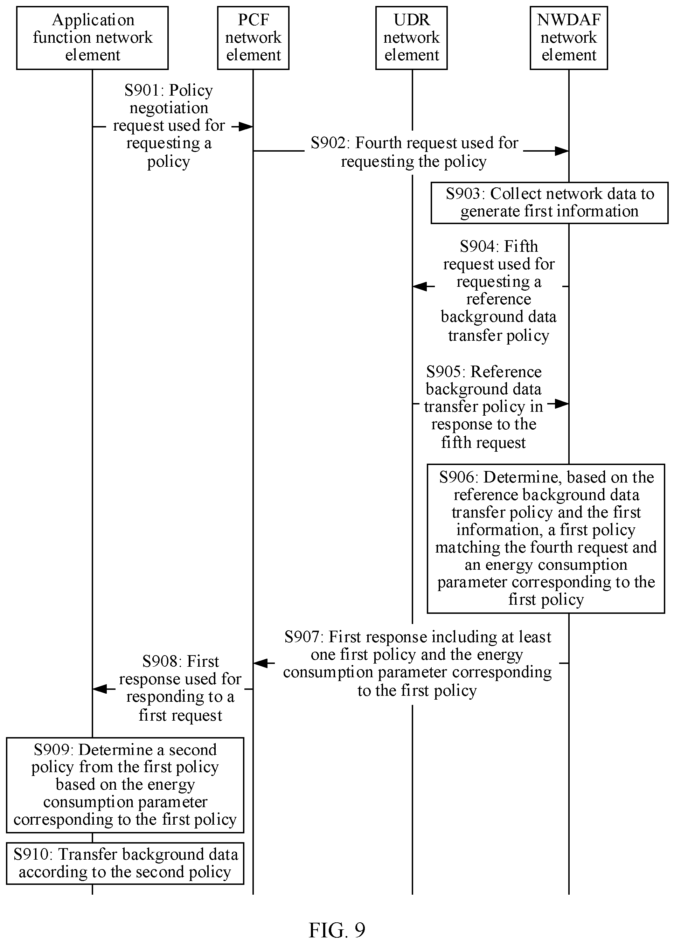

In an embodiment, the first network element is a PCF network element. The PCF network element does not directly determine a first policy and an energy consumption parameter corresponding to the first policy, but obtains the first policy and the energy consumption parameter corresponding to the first policy from an NWDAF network element. FIG. 9 is a schematic flowchart of a communication method in this scenario. As shown in FIG. 9, the method may include the following steps.

S901: An application function network element sends, to a PCF network element, a policy negotiation request used for requesting a policy. Correspondingly, the PCF network element receives, from the application function network element, the policy negotiation request used for requesting the policy.

The policy negotiation request may be the first request in step S310 in the embodiment shown in FIG. 3.

S902: The PCF network element sends, to an NWDAF network element, a fourth request used for requesting the policy. Correspondingly, the second network element receives the fourth request from the first network element.

The fourth request may be determined based on the first request in step S310 in the embodiment shown in FIG. 3. For example, the fourth request may include the following three pieces of information: first indication information and third indication information in the first request, and a desired time window for background data transfer in the second indication information (or a desired time window for background data transfer in the second indication information modified by the second network element according to a policy of the second network element).

For example, the fourth request may include:
a total energy budget for background data transfer (total energy budget);
an energy budget for background data transfer per terminal device (energy budget per UE);
an energy saving indication (energy saving indication);
a data volume (volume) of data transferred between an application function network element and a UE; and
a desired time window, corresponding to each terminal device, for background data transfer (desired time window).

It should be understood that the fourth request is an example for description. During specific implementation, there may be another design. This is not limited.

S903: The NWDAF network element collects network data to generate first information.

The network data may include energy consumption information of an existing policy and/or energy consumption or energy efficiency information of background data transfer via the network, collected by an operation, administration and maintenance network element (or an energy exposure network element). The first information may be generated based on the network data. For a process of generating the first information, refer to a related technology. Details are not described again.

S904: The NWDAF network element sends, to a UDR network element, a fifth request used for requesting a reference background data transfer policy. Correspondingly, the UDR network element receives the fifth request.

A function of the fifth request is the same as that of the second request in the embodiment shown in FIG. 5. For descriptions of the fifth request, refer to the descriptions of the second request in the embodiment shown in FIG. 5. Details are not described again.

S905: The UDR network element sends, to the NWDAF network element, the reference background data transfer policy in response to the fifth request. Correspondingly, the NWDAF network element receives the reference background data transfer policy.

After receiving the reference background data transfer policy, the NWDAF network element may use the reference background data transfer policy to determine a first policy.

S906: The NWDAF network element determines, based on the first information and the reference background data transfer policy, at least one first policy matching the fourth request and an energy consumption parameter corresponding to the first policy.

For descriptions of determining the first policy and the energy consumption parameter corresponding to the first policy, refer to the descriptions of step S740 in the embodiment shown in FIG. 7. Details are not described again.

It should be understood that step S904 and step S905 are optional solutions. With reference to introduction of the reference background data transfer policy, the at least one first policy and the energy consumption parameter corresponding to the first policy are determined efficiently and accurately. During specific implementation, even if the reference background data transfer policy is not introduced, the at least one first policy and the energy consumption parameter corresponding to the first policy can still be determined.

S907: The NWDAF network element sends, to the PCF network element, a first response including the at least one first policy and the energy consumption parameter corresponding to the first policy. Correspondingly, the PCF network element receives the first response from the NWDAF network element.

After determining the at least one first policy and the energy consumption parameter corresponding to the first policy, the NWDAF network element may send, to the PCF network element in a form of a first response, the at least one first policy and the energy consumption parameter corresponding to the first policy, so that the PCF network element provides the at least one first policy and the energy consumption parameter corresponding to the first policy for the application function network element.

S908: The PCF network element sends, to the application function network element, a first response used for responding to the first request. Correspondingly, the application function network element receives the first response from the PCF network element or the NWDAF network element.

The first response includes the first policy and the corresponding energy consumption parameter. For several possible designs of the first response, refer to the descriptions of the first response in step S320 in the embodiment shown in FIG. 3.

S909: The application function network element determines a second policy from the first policy based on the energy consumption parameter corresponding to the first policy.

After receiving the first response, the application function network element may determine the second policy from the first policy for an energy-saving objective. A mechanism for determining the second policy by the application function network element may be flexibly set. For example, a first policy with lowest energy consumption may be determined as the second policy. Alternatively, a first policy with a highest ratio of used renewable energy may be determined as the second policy. Alternatively, a first policy with lowest energy consumption in a plurality of first policies that use renewable energy may be determined as the second policy.

S910: The application function network element transfers the background data according to the second policy.

After determining the second policy, the application function network element may transfer the background data according to the second policy. Energy-saving transfer of the background data can be implemented.

In this embodiment of this application, after the PCF network element receives, from the application function network element, the first request used for requesting the policy for transferring the background data, the PCF network element obtains, from the NWDAF network element, the first response used for responding to the first request, and sends, to the application function network element, the first response used for responding to the first request, where the first response includes the at least one first policy and the energy consumption parameter corresponding to each first policy. After receiving the first response, the application function network element may select the second policy from the first policy based on the energy consumption parameter corresponding to each first policy, and the background data is transferred between the application function network element and the terminal device according to the second policy. Because the second policy is selected based on the energy consumption parameter, transferring the background data according to the second policy can achieve energy savings.

With reference to the embodiments shown in FIG. 7, FIG. 8, and FIG. 9, it can be learned that, in embodiments of this application, a policy for achieving energy savings of background data transfer is specifically designed in various network architectures. Specifically, after the first network element receives, from the application function network element, the first request used for requesting the policy for transferring the background data, the first network element sends, to the application function network element, the first response used for responding to the first request, where the first response includes the at least one first policy and the energy consumption parameter corresponding to each first policy; and after receiving the first response, the application function network element may select the second policy with low energy consumption from the first policy based on the energy consumption parameter corresponding to each first policy, and the background data is transferred between the application function network element and the terminal device according to the second policy. Because the second policy is a policy with low energy consumption and selected based on the energy consumption parameter, transferring the background data according to the second policy can achieve energy savings.

The foregoing mainly describes the solutions provided in embodiments of this application from a perspective of execution logic of each step. It may be understood that, to implement the foregoing functions, each node, for example, the first network element, includes a corresponding hardware structure and/or a software module for performing the functions. A person skilled in the art should easily be aware that, in combination with algorithm steps of the examples described in embodiments disclosed in this specification, the methods in embodiments of this application can be implemented by hardware, software, or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first network element may be divided into functional modules based on the method examples, for example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. In actual implementation, another division manner may be used.

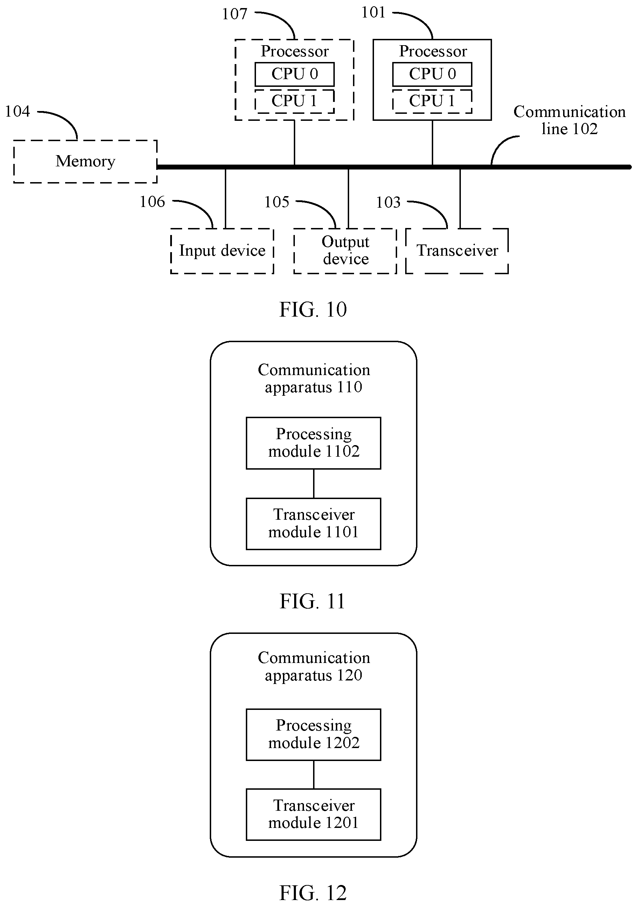

During specific implementation, network elements shown in this application, for example, the first network element, may use a composition structure shown in FIG. 10 or include components shown in FIG. 10. FIG. 10 is a diagram of a structure of a communication apparatus according to an embodiment of this application. When the communication apparatus has the functions of the first network element in embodiments of this application, the communication apparatus may be a first network element, or a chip or a system-on-a-chip in the first network element. When the communication apparatus has the functions of the application function network element in embodiments of this application, the communication apparatus may be an application function network element, or a chip or a system-on-a-chip in the application function network element.

As shown in FIG. 10, the communication apparatus may include a processor 101. Optionally, the communication apparatus may further include a communication line 102, a transceiver 103, and a memory 104. The processor 101, the memory 104, and the transceiver 103 may be connected via the communication line 102. In an example, the processor 101 may include one or more CPUs, for example, a CPU 0 and a CPU 1 in FIG. 10.

In an optional implementation, the communication apparatus includes a plurality of processors. For example, the communication apparatus may further include a processor 107 in addition to the processor 101 in FIG. 10.

The processor 101 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 101 may be another apparatus having a processing function, for example, a circuit, a component, or a software module.

The communication line 102 is configured to transfer information between the components included in the communication apparatus.

The transceiver 103 is configured to communicate with another device or another communication network. The another communication network may be an Ethernet, a radio access network (radio access network, RAN), a wireless local area network (wireless local area network, WLAN), or the like. The transceiver 103 may be an interface circuit, a pin, a radio frequency module, a transceiver, or any apparatus that can implement communication.

Further, the communication apparatus may include the memory 104. The memory 104 is configured to store instructions. The instructions may be computer programs.

The memory 104 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disk storage, an optical disc storage, a magnetic disk storage medium, or another magnetic storage device. The optical disc storage includes a compressed optical disc, a laser disc, an optical disc, a digital versatile disc, a Blu-ray disc, or the like.

It should be noted that the memory 104 may exist independently of the processor 101, or may be integrated with the processor 101. The memory 104 may be configured to store instructions, program code, some data, or the like. The memory 104 may be located inside the communication apparatus, or may be located outside the communication apparatus. This is not limited. When executing the instructions stored in the memory 104, the processor 101 may implement the method provided in embodiments of this application.

In an optional implementation, the communication apparatus further includes an output device 105 and an input device 106. For example, the input device 106 is a device, for example, a keyboard, a mouse, a microphone, or a joystick, and the output device 105 is a device, for example, a display or a speaker (speaker).

It should be noted that the communication apparatus may be a desktop computer, a portable computer, a network server, a mobile phone, a tablet computer, a wireless terminal device, an embedded device, a chip system, or a device having a structure similar to that in FIG. 10. In addition, a composition structure shown in FIG. 10 does not constitute a limitation on the communication apparatus. In addition to the components shown in FIG. 10, the communication apparatus may include more or fewer components than those shown in the figure, or some components may be combined, or there may be a different component arrangement.

In embodiments of this application, the chip system may include a chip, or may include a chip and another discrete component.

FIG. 11 is a diagram of a structure of a communication apparatus 110. The communication apparatus is used in a first network element. Modules in the apparatus shown in FIG. 11 have functions of implementing corresponding steps in FIG. 3 to FIG. 9, and can achieve corresponding technical effects. For beneficial effects corresponding to steps performed by the modules, refer to descriptions of the corresponding steps in FIG. 3 to FIG. 9. Details are not described again. The functions may be implemented by hardware, or may be implemented by hardware executing corresponding software. The hardware or the software includes one or more modules corresponding to the functions. The communication apparatus may be a terminal device, or a chip or a system-on-a-chip in the terminal device. For example, the communication apparatus includes:
a transceiver module 1101, configured to receive, from an application function network element, a first request used for requesting a policy for transferring background data between the application function network element and a terminal device, where a network to which the first network element belongs is configured to transfer the background data between the application function network element and the terminal device; and a processing module 1102, configured to obtain at least one first policy and an energy consumption parameter corresponding to the first policy. The transceiver module 1101 is further configured to send, to the application function network element, a first response used for responding to the first request, where the first response includes the at least one first policy and the energy consumption parameter corresponding to each of the at least one first policy. The energy consumption parameter corresponding to the first policy includes at least one of the following: energy consumed for transferring the background data via the network when the background data is transferred between the application function network element and the terminal device according to the first policy, or energy efficiency of transferring the background data via the network when the background data is transferred between the application function network element and the terminal device according to the first policy.

FIG. 12 is a diagram of a structure of a communication apparatus 120. The communication apparatus is used in an application function network element. Modules in the apparatus shown in FIG. 12 have functions of implementing corresponding steps in FIG. 3 to FIG. 9, and can achieve corresponding technical effects. For beneficial effects corresponding to steps performed by the modules, refer to descriptions of the corresponding steps in FIG. 3 to FIG. 9. Details are not described again. The functions may be implemented by hardware, or may be implemented by hardware executing corresponding software. The hardware or the software includes one or more modules corresponding to the functions. The communication apparatus may be a terminal device, or a chip or a system-on-a-chip in the terminal device. For example, the communication apparatus includes:
a transceiver module 1201, configured to receive a first response from a first network element, where the first response includes at least one first policy and an energy consumption parameter corresponding to each first policy, the first policy is used for transferring background data between the application function network element and a terminal device, a network to which the first network element belongs is configured to transfer the background data between the application function network element and the terminal device, and the energy consumption parameter corresponding to the first policy includes at least one of the following: energy consumed for transferring the background data via the network when the background data is transferred between the application function network element and the terminal device according to the first policy, or energy efficiency of transferring the background data via the network when the background data is transferred between the application function network element and the terminal device according to the first policy; and a processing module 1202, configured to determine a second policy from the first policy based on the energy consumption parameter corresponding to the first policy, where the transceiver module 1201 is configured to transfer the background data according to the second policy.

An embodiment of this application further provides a communication system. The communication system may include a first network element and an application function network element. The first network element may have functions of the communication apparatus 110, and the application function network element may have functions of the communication apparatus 120.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit of a terminal device apparatus according to any one of the foregoing embodiments, for example, including a data transmit end and/or a data receive end, for example, a hard disk drive or an internal memory of the terminal device apparatus. The computer-readable storage medium may alternatively be an external storage device of the terminal device apparatus, for example, a plug-in hard disk, a smart media card (smart media card, SMC), a secure digital (secure digital, SD) card, or a flash card (flash card) that is configured on the terminal device apparatus. Further, the computer-readable storage medium may include both an internal storage unit and an external storage device of the terminal device apparatus. The computer-readable storage medium is configured to store the computer program and other programs and data that are needed by the terminal device apparatus. The computer-readable storage medium may be further configured to temporarily store data that has been output or is to be output.

An embodiment of this application further provides computer instructions. All or some of procedures in the foregoing method embodiments may be completed by the computer instructions instructing related hardware (for example, a computer, a processor, a network device, and a terminal device). The program may be stored in the foregoing computer-readable storage medium.

An embodiment of this application further provides a chip system. The chip system may include a chip, or may include a chip and another discrete component. This is not limited. The chip system includes a processor and a transceiver. All or some of procedures in the foregoing method embodiments may be completed by the chip system. For example, the chip system may be configured to implement the functions performed by the first network element or the application function network element in the foregoing method embodiments.

In a possible design, the chip system further includes a memory. The memory is configured to store program instructions and/or data. When the chip system runs, the processor executes the program instructions stored in the memory, so that the chip system performs the functions performed by the first network element or the application function network element in the foregoing method embodiments.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD); or may be a volatile memory (volatile memory), for example, a random access memory (random access memory, RAM). The memory is any other medium that can carry or store expected program code in a form of an instruction or a data structure and that can be accessed by a computer, but is not limited thereto. Alternatively, the memory in embodiments of this application may be a circuit or any other apparatus that can implement a storage function, and is configured to store instructions and/or data.

It should be noted that, in the specification, claims, and accompanying drawings of this application, the terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in embodiments of this application, "at least one (item)" means one or more, "a plurality of" means two or more, "at least two (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. It should be understood that in embodiments of this application, "B corresponding to A" indicates that B is associated with A. For example, B may be determined based on A. It should be further understood that determining B based on A does not mean that B is determined based only on A, and B may alternatively be determined based on A and/or other information. In addition, "connection" in embodiments of this application means various connection manners such as a direct connection or an indirect connection, for implementing communication between devices. This is not limited in embodiments of this application.

Unless otherwise specified, "transmit" (transmit/transmission) in embodiments of this application means bidirectional transfer, and includes a sending action and/or a receiving action. Specifically, "transfer" in embodiments of this application includes data sending, data receiving, or data sending and receiving. In other words, data transfer herein includes uplink data transfer and/or downlink data transfer. Data may include a channel and/or a signal. The uplink data transfer is uplink channel transfer and/or uplink signal transfer, and the downlink data transfer is downlink channel transfer and/or downlink signal transfer. In embodiments of this application, a "network" and a "system" express the same concept, and a communication system is a communication network.

The foregoing descriptions about implementations allow a person skilled in the art to clearly understand that, for the purpose of convenient and brief descriptions, division of the foregoing functional modules is used as an example for illustration. During actual application, the foregoing functions can be allocated to different functional modules and implemented as required, to be specific, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of a software functional unit and sold or used as an independent product, the integrated unit may be stored in a readable storage medium. Based on such understanding, the technical solutions in embodiments of this application essentially, or some of the technical solutions that contribute to a conventional technology, or all or some of the technical solutions may be embodied in a form of a software product. The software product is stored in a storage medium, and includes several instructions for instructing a device, for example, a single-chip microcomputer, a chip, or a processor (processor), to perform all or some of the steps of the methods in embodiments of this application. The foregoing storage medium includes any medium that can store program code, for example, a USB flash drive, a removable hard disk, a ROM, a RAM, a magnetic disk, or an optical disc. The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method comprises:
receiving, by a first network element from an application function network element, a first request used for requesting a policy, wherein the policy is used for transferring background data between the application function network element and a terminal device, and a network to which the first network element belongs is configured to transfer the background data between the application function network element and the terminal device; and
sending, by the first network element to the application function network element, a first response used for responding to the first request, wherein the first response comprises at least one first policy, the first response further comprises an energy consumption parameter corresponding to each of the at least one first policy; and
the energy consumption parameter corresponding to the first policy comprises at least one of the following: energy consumed for transferring the background data via the network when the background data is transferred between the application function network element and the terminal device according to the first policy, or energy efficiency of transferring the background data via the network when the background data is transferred between the application function network element and the terminal device according to the first policy.

2. The communication method according to claim 1, wherein the first request comprises first indication information, the first indication information indicates that the network is to use renewable energy to transfer the background data, the first policy comprises a first time window, and the renewable energy is available to the network in the first time window.

3. The communication method according to claim 2, wherein the first response further comprises:
a ratio of the renewable energy to the energy used for transferring the background data via the network when the background data is transferred between the application function network element and the terminal device according to the first policy; and/or
second information, wherein the second information indicates that the energy used for transferring the background data via the network comprises the renewable energy when the background data is transferred between the application function network element and the terminal device according to the first policy.

4. The communication method according to any one of claims 1 to 3, wherein the method further comprises:
obtaining, by the first network element, the at least one first policy and the energy consumption parameter corresponding to the first policy.

5. The communication method according to claim 4, wherein the obtaining, by the first network element, the at least one first policy and the energy consumption parameter corresponding to the first policy comprises:
determining, by the first network element based on the first information, the at least one first policy and the energy consumption parameter corresponding to the first policy, wherein the first information indicates energy efficiency of transferring the data via the network in each time period.

6. The communication method according to claim 5, wherein the method further comprises:
sending a third request to a second network element, wherein the third request is used for requesting the energy efficiency of transferring the data via the network in each time period; and
receiving the first information from the second network element.

7. The communication method according to claim 3, wherein the obtaining, by the first network element, the at least one first policy and the energy consumption parameter corresponding to the first policy comprises:
sending, by the first network element, the fourth request to a second network element, wherein the fourth request is used for requesting the policy; and
receiving, from the second network element, the at least one first policy and the energy consumption parameter corresponding to the first policy.

8. The communication method according to any one of claims 1 to 7, wherein the energy efficiency of transferring the background data via the network when the background data is transferred between the application function network element and the terminal device according to the first policy comprises at least one of the following:
an energy efficiency level, or a data volume of the background data transferred via the network per unit of energy when the background data is transferred between the application function network element and the terminal device according to the first policy.

9. A communication method, wherein the method comprises:
receiving, by an application function network element, a first response from a first network element, wherein the first response comprises at least one first policy, the first response further comprises an energy consumption parameter corresponding to each of the at least one first policy, a network to which the first network element belongs is configured to transfer the background data between the application function network element and a terminal device, and the energy consumption parameter corresponding to the first policy comprises at least one of the following: energy consumed for transferring the background data via the network when the background data is transferred between the application function network element and the terminal device according to the first policy, or energy efficiency of transferring the background data via the network when the background data is transferred between the application function network element and the terminal device according to the first policy;
determining, by the application function network element, a second policy from the first policy based on the energy consumption parameter corresponding to the first policy; and
transferring the background data between the application function network element and the terminal device via the network according to the second policy.

10. The communication method according to claim 9, wherein the method further comprises:
sending, by the application function network element to the first network element, a first request used for requesting the first policy.

11. The communication method according to claim 10, wherein the first request comprises first indication information, the first indication information indicates that the network is to use renewable energy to transfer the background data, the first policy comprises a first time window, and the renewable energy is available to the network in the first time window.

12. The communication method according to any one of claims 9 to 11, wherein the energy efficiency of transferring the background data via the network when the background data is transferred between the application function network element and the terminal device according to the first policy comprises at least one of the following:
an energy efficiency level, or a data volume of the background data transferred via the network per unit of energy when the background data is transferred between the application function network element and the terminal device according to the first policy.

13. A communication apparatus, wherein the apparatus comprises a module configured to perform the method according to any one of claims 1 to 12.

14. A communication apparatus, wherein the communication apparatus comprises a processor and a memory, and the processor is configured to execute instructions in the memory, to implement the method according to any one of claims 1 to 12.

15. A computer-readable storage medium, wherein the computer-readable storage medium stores computer instructions, and when the computer instructions are run on a computer, the computer is caused to perform the method according to any one of claims 1 to 12.

16. A chip, wherein the chip comprises a controller and an interface circuit, and the controller is configured to interact with another apparatus through the interface circuit, to perform the method according to any one of claims 1 to 12.

17. A communication system, wherein the communication system comprises a first network element and an application function network element, the first network element is configured to perform the method according to any one of claims 1 to 8, and the application function network element is configured to perform the method according to any one of claims 9 to 12.

18. A computer program product comprising instructions, wherein when the computer program product is run on a computer, the computer is caused to perform the method according to any one of claims 1 to 12.
